(19) Europäisches Patentamt
European Patent Office
Office européen des brevets

(11) **EP 3 512 064 B1**

(12) **EUROPÄISCHE PATENTSCHRIFT**

(45) Veröffentlichungstag und Bekanntmachung des Hinweises auf die Patenterteilung:
**15.06.2022 Patentblatt 2022/24**

(21) Anmeldenummer: **19150266.5**

(22) Anmeldetag: **03.01.2019**

(51) Internationale Patentklassifikation (IPC):
*H02J 3/38* (2006.01)    *H02J 3/40* (2006.01)

(52) Gemeinsame Patentklassifikation (CPC):
**H02J 3/381; H02J 3/40;** H02J 2300/28;
Y02E 10/72; Y02E 10/76

(54) **STEUERUNG EINER WINDENERGIEANLAGE DURCH ÄNDERUNG VON DREHZAHLPARAMETERN**

CONTROL OF A WIND TURBINE BY CHANGING ROTATION RATE PARAMETERS

COMMANDE D'UNE AÉROGENERATEUR PAR MODIFICATION DES PARAMÈTRES DE VITESSE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2018 DE 102018000157**

(43) Veröffentlichungstag der Anmeldung:
**17.07.2019 Patentblatt 2019/29**

(73) Patentinhaber: **Siemens Gamesa Renewable Energy Service GmbH**
**20097 Hamburg (DE)**

(72) Erfinder: **LETAS, Heinz-Hermann**
**24796 Bovenau (DE)**

(74) Vertreter: **Groth, Wieland**
**Patentanwalt**
**Zippelhaus 4**
**20457 Hamburg (DE)**

(56) Entgegenhaltungen:
**DE-B3-102009 037 238**

**Beschreibung**

Die Erfindung betrifft ein Verfahren zur Steuerung einer Windenergieanlage mit einem Windrotor, einem damit angetriebenen, doppelt gespeisten Asynchrongenerator und einem Umrichter, der zur Einspeisung elektrischer Energie in ein elektrisches Netz mit wenigstens einem Netzparameter elektrisch angeschlossen wird, und einer Steuerung mit einem Speicher, in dem Drehzahlparameter abgelegt werden. Die Erfindung betrifft auch eine Windenergieanlage mit einem Windrotor, einem damit angetriebenen, doppelt gespeisten Asynchrongenerator und einem Umrichter, der zur Einspeisung elektrischer Energie in ein elektrisches Netz mit wenigstens einem Netzparameter elektrisch angeschlossen ist, und einer Steuerung mit einem Speicher, in dem Drehzahlparameter abgelegt sind.

Windenergieanlagen verwenden in erheblichem Maße doppelt gespeiste Asynchrongeneratoren zur Stromerzeugung. Bei Asynchrongeneratoren ist der Stator direkt mit dem Stromnetz, gegebenenfalls über einen Transformator, verbunden. Beim doppelt gespeisten Asynchrongenerator (engl. DFIG) ist zusätzlich der Rotor des Generators über einen Umrichter mit dem Stromnetz verbunden. Der Umrichter dient auch zur Regelung der Drehzahl des Generators. Da nur etwa ein Sechstel der in das Netz eingespeisten Leistung über den Rotorstrang und den Umrichter in das Netz eingespeist wird, können die Umrichter für relativ kleine Leistungen ausgelegt werden.

Nachteiligerweise reagieren die DFIG-Systeme sehr empfindlich auf Veränderungen der Netzfrequenz. Beispielsweise sinkt die Netzfrequenz ab, wenn zu wenig Wirkleistung ins Netz eingespeist wird, während sie bei zu viel Wirkleistung ansteigt. Zwar treten Schwankungen der Netzparameter, insbesondere Netzfrequenzschwankungen in Europa nur selten auf, jedoch sind die Netze in anderen Ländern und auf anderen Kontinenten nicht von einer derartigen Netzfrequenzstabilität gekennzeichnet.

Damit der doppelt gespeiste Asynchrongenerator möglichen Änderungen der Netzfrequenz Rechnung tragen kann, also insbesondere der Umrichter nicht durch eine zu hohe Rotorspannung bzw. Rotorleistung zerstört wird, werden insbesondere in kritischen Bereichen wie der Minimaldrehzahl, der Nenndrehzahl und der Maximaldrehzahl im Stand der Technik Toleranzen vorgesehen, die nachteiligerweise die Leistungsausbeute an diesen Stellen, aber auch grundsätzlich verringern können.

Aus der DE 10 2009 037 238 B3 ist eine Windenergieanlage bekannt mit einem doppelt gespeisten Asynchrongenerator mit einem Umrichter und einer Steuerung. Es ist ein frequenzabhängiger Drehzahlbegrenzer vorgesehen, der mit einem Klassifikator derart zusammenwirkt, dass nur eine untere Grenzdrehzahl bei Überfrequenz erhöht wird, wobei die obere Grenzdrehzahl unverändert bleibt, und nur eine obere Grenzdrehzahl bei Unterfrequenz erniedrigt wird, wobei eine untere Grenzdrehzahl erhalten bleibt.

Es ist auch Aufgabe der vorliegenden Erfindung, ein Verfahren zur Regelung einer Windenergieanlage zur Verfügung zu stellen, das die oben genannten Nachteile zumindest verringert.

Es ist Aufgabe der vorliegenden Erfindung, eine Windenergieanlage mit doppelt gespeistem Asynchrongenerator zur Verfügung zu stellen, die die oben genannten Nachteile zumindest verringert.

Die Aufgabe wird hinsichtlich ihres ersten Aspekts durch ein eingangs genanntes Verfahren mit den Merkmalen des Anspruchs 1 gelöst.

Die Erfindung macht von der Idee Gebrauch, die Wirkung von Netzparameteränderungen durch variable, netzfrequenzabhängige Einstellungen von Drehzahlparametern zu kompensieren oder zumindest zu reduzieren.

Unter Drehzahlparametern werden hier vorzugsweise die Minimaldrehzahl, die Maximaldrehzahl und die Nenndrehzahl verstanden. Es ist jedoch auch denkbar, dass weitere Drehzahlen und sogar allgemeinere Parameter umfasst sein können.

Die Drehzahlparameter Minimaldrehzahl, Maximaldrehzahl und die Nenndrehzahl sind Parameter, die bekannterweise einer einzelnen Windenergieanlage oder einem Typ von Windenergieanlage zugeordnet werden und nach der Zuordnung ein feststehender, unveränderlicher Windenergieanlagenparameter sind. Die Erfindung räumt mit der Vorstellung feststehender Drehzahlparameter auf. Die Drehzahlparameter werden variabel ausgebildet.

Unter Netzparametern werden hier insbesondere die Netzfrequenz oder die Netzspannung verstanden.

Es hat sich gezeigt, dass Netzfrequenzänderungen üblicherweise innerhalb eines Netzfrequenzbandes stattfinden. Das Netzfrequenzband weist eine Netznennfrequenz auf, die in Europa bei 50 Hz liegt, sowie eine minimale und eine maximale Netzfrequenz. Die minimale und die maximale Netzfrequenz sind Erfahrungswerte, innerhalb derer sich die selten auftretenden Netzfrequenzschwankungen tatsächlich ausbilden. Üblicherweise liegen diese bei 45 Hz bis 55 Hz, es sind auch Netzfrequenzbänder zwischen 47 Hz und 52 Hz denkbar. Auch alle Bandbreiten mit Grenzwerten zwischen 45 Hz und 55 Hz sind mitoffenbart. Es können aber auch Netzfrequenzschwankungen außerhalb der Grenzwerte auftreten. Entsprechende Werte und Bänder gelten natürlich auch für Netze mit anderen Nennfrequenzen, wie z. B. 60 Hz.

Erfindungsgemäß wird wenigstens eine veränderliche Kennlinie zwischen wenigstens einem der Drehzahlparameter und dem wenigstens einen Netzparameter bestimmt. Eine Kennlinie kann beispielsweise zwischen der Minimaldrehzahl und der Netzfrequenz, der Maximaldrehzahl und der Netzfrequenz sowie der Nenndrehzahl und der Netzfrequenz bestimmt werden. Die Kennlinie ist nicht trivial, sie ist erfindungsgemäß veränderlich, d. h. verschiedenen Netzparametern werden zumindest nicht immer dieselben Drehzahlparameter zugeordnet. Wenigstens zwei Netzparameterwerten werden unterschiedliche Drehzahlparameterwerte zugeordnet.

Die wenigstens eine Kennlinie wird vorab bestimmt und dann in dem Speicher der Windenergieanlage abgelegt. Bei dem Speicher, in dem die wenigstens eine Kennlinie abgelegt wird, kann es sich um denselben Speicher handeln, in dem die bisher konstant gehaltenen Werte der Minimaldrehzahl, Maximaldrehzahl und Nenndrehzahl abgelegt sind. Es kann jedoch auch ein neuer Speicher vorgesehen sein. Der Begriff der Kennlinie ist hier allgemein zu verstehen, er kann auch Funktionen umfassen.

Erfindungsgemäß wird während des Betriebs der Windenergieanlage der wenigstens eine Netzparameter gemessen, vorzugsweise wird er kontinuierlich gemessen; es ist jedoch auch denkbar, dass der Netzparameter in regelmäßigen oder unterschiedlichen Abständen gemessen wird. Die ermittelten Werte des Netzparameters werden als Netzparameterwerte der Steuerung zugeführt, und die Steuerung ermittelt anhand der abgelegten zugehörigen Kennlinie zwischen dem Netzparameterwert und dem Drehzahlparameter, welche Werte des wenigstens einen Drehzahlparameters den gemessenen Werten des Netzparameters über die wenigstens eine Kennlinie zugeordnet sind. Diese neuen und veränderten Drehzahlparameterwerte werden dann vorzugsweise durch die Steuerung der Windenergieanlage aktiviert und der Windenergieanlagensteuerung zugrundegelegt.

Besonders bevorzugt stellt die wenigstens eine Kennlinie einen Zusammenhang zwischen der Netzfrequenz und der Minimaldrehzahl oder der Maximaldrehzahl oder der Nenndrehzahl her.

In dem Speicher sind vorzugsweise eine Vielzahl von verschiedenen Kennlinien zwischen Netzparametern und Drehzahlparametern abgelegt. Es können durchaus auch zwischen denselben Netzparametern und Drehzahlparametern mehrere verschiedene Kennlinien abgelegt sein. Die Auswahl der Kennlinie kann automatisch gesteuert werden oder auch durch Eingabe erfolgen.

Vorzugweise werden die Minimaldrehzahl und/oder die Maximaldrehzahl und/oder die Nenndrehzahl in der wenigstens einen Kennlinie mit zunehmender Netzfrequenz erhöht.

Im Bereich der Minimaldrehzahl, also der Drehzahl des Rotors, bei der die Windenergieanlage an das Netz geht, also Leistung dahin abgibt, entsteht das Problem, dass bei höheren Netzfrequenzen als der Netznennfrequenz eine höhere Spannung am Läufer, auch Rotor genannt, induziert wird, als bei der Netznennfrequenz, die dann im Läuferkreis am Umrichter anliegt und also diesen bei Überschreiten der maximal zulässigen Umrichterspannung schädigt. Bei konstanter minimaler Drehzahl, die sich über alle Netzfrequenzen erstreckt, wird die Minimaldrehzahl der Netznennfrequenz bereits so hoch gesetzt, dass eine hinreichende Toleranz zur maximalen Umrichterspannung besteht, die möglichen Schwankungen der Netznennfrequenz Rechnung trägt. Dadurch wird die Leistungsabgabe der Windenergieanlage aber verringert.

Die Erfindung macht unter anderem von der Idee Gebrauch, die Minimaldrehzahl netzfrequenzabhängig zu gestalten. Die Minimaldrehzahl ist variabel oder veränderlich, und sie ist damit eine Funktion der tatsächlich am Generator anliegenden Netzfrequenz.

Vorzugsweise wird die Kennlinie so bestimmt, dass mit zunehmender Netzfrequenz die Minimaldrehzahl erhöht wird. Besonders bevorzugt wird der Zusammenhang derart gewählt, dass die Minimaldrehzahl umso höher gewählt wird, je höher die Netzfrequenz ist. Dabei wird der maximalen Netzfrequenz des Netzfrequenzbandes eine Minimaldrehzahl derart zugeordnet, dass die erzeugte Rotorspannung dennoch unterhalb der zulässigen Umrichterspannung liegt.

Auf der anderen Seite des Drehzahlspektrums wird eine Kennlinie so bestimmt, dass vorzugsweise die Maximaldrehzahl mit zunehmender Netzfrequenz ebenfalls erhöht wird. Auch hier kann die Kennlinie derart bestimmt sein, dass je höher die Netzfrequenz wird, desto höher die Maximaldrehzahl gewählt wird. Es sind jedoch auch andere Zusammenhänge möglich. Insbesondere können die Zusammenhänge derart gewählt werden, dass sich eine Netzfrequenzabhängigkeit erst dann einstellt, wenn sich die Netzfrequenz in unmittelbarer Nähe, d. h. +/- 0,5 Hz der Minimal- bzw. Maximalfrequenz, befindet.

Besonders bevorzugt wird die Nenndrehzahl bei einer Netzfrequenz oberhalb der Netznennfrequenz erhöht.

Wenn die Netzfrequenz abnimmt, führt dieses aufgrund einer dadurch veränderten Wirkleistungsaufteilung zwischen dem Rotor und dem Stator des Generators zu einer Erhöhung der Leistung am Rotor und damit am Umrichter, die zu einer Beschädigung des Umrichters führen kann. Daher ist es erfindungsgemäß vorgesehen, die Nenndrehzahl bei Unterfrequenz im elektrischen Netz abzusenken, und zwar vorzugsweise umso stärker abzusenken, je geringer die Netzfrequenz wird. Umgekehrt führt eine Erhöhung der Netzfrequenz über die Netznennfrequenz zu einer Erhöhung der Leistung im Stator und damit auch zu erhöhten Strömen in Stator, Rotor und Umrichter am Generator. Dazu ist erfindungsgemäß eine Kennlinie ausgebildet, die die Nenndrehzahl bei Überfrequenz im elektrischen Netz erhöht, vorzugsweise umso stärker erhöht, je höher die Netzfrequenz wird.

Um zu vermeiden, dass fortlaufend selbst bei allerkürzesten Änderungen der Netzparameter eine Aktivierung neuer Drehzahlparameter stattfindet, verfügt die Steuerung vorzugsweise über eine gewisse Trägheit, so dass die Veränderung der Drehzahlparameter vorzugsweise erst nach einer Totzeit erfolgt, innerhalb derer der geänderte Netzparameter zumindest auch innerhalb von Toleranzen stabil sein muss. Vorzugsweise wird der einem geänderten Netzparameterwert zugeordnete geänderte Drehzahlparameter daher erst nach einer Totzeit aktiviert, innerhalb derer der eine geänderte Netzparameterwert bestätigt wird. Das ist insbesondere dann der Fall, wenn durch die Veränderung der Netzfrequenz eine langsame Erhitzung von Bauteilen sattfindet.

Vorzugsweise kann es vorgesehen sein, dass bei einer Änderung der Netzparameter eine sofortige Änderung bestimmter Drehzahlparameter erfolgt. Beispielsweise, wenn durch die Änderung der Netzparameter eine zu große Rotorspannung induziert wird, die den Umrichter auch nach kurzer Zeit schädigen würde.

Vorzugsweise ist die Steuerung mit einer Schutzeinrichtung versehen, die bei Überschreiten vorgegebener Drehzahlwerte die gesamte Windenergieanlage abschaltet. Günstigerweise werden Abschaltwerte einer Schutzeinrichtung entsprechend den Drehzahlparameterwerten geändert.

Die Erfindung wird auch durch eine Windenergieanlage der eingangs genannten Art mit den Merkmalen des Anspruchs 13 verwirklicht.

Die Windenergieanlage eignet sich insbesondere zur Durchführung eines der oben genannten Verfahren, umgekehrt eignen sich die oben genannten Verfahren auch zur Durchführung auf einer der nachfolgend beschriebenen Windenergieanlagen.

Die erfindungsgemäße Windenergieanlage weist in bekannter Weise eine Steuerung mit einem Speicher auf, in dem Werte für Drehzahlparameter wie beispielsweise Minimaldrehzahl, Maximaldrehzahl, Nenndrehzahl abgelegt sind. Dabei kann es sich, wie oben angeführt, durchaus auch um andere Parameter handeln.

Auch hinsichtlich der Vorrichtung ist erfindungsgemäß entscheidend, dass in dem Speicher veränderliche Kennlinien zwischen wenigstens einem der Drehzahlparameter und dem wenigstens einen Netzparameter abgelegt sind. Die wenigstens eine Kennlinie ist günstigerweise vor der Inbetriebnahme der Windenergieanlage ermittelt und in dem Speicher der Steuerung abgelegt.

Erfindungsgemäß ist eine Netzparametermesseinrichtung vorgesehen, die mit der Steuerung vorzugsweise elektrisch leitend in Verbindung steht und die ihre Messwerte der Steuerung zuführt, und die Steuerung aktiviert die den Netzparametermesswerten zugeordneten Drehzahlparameterwerte.

Vorzugsweise nimmt in der wenigstens einen Kennlinie die Minimaldrehzahl mit zunehmender Netzfrequenz zu, oder sie nimmt mit abnehmender Netzfrequenz ab. Günstigerweise nimmt die Maximaldrehzahl mit zunehmender Netzfrequenz zu, oder sie nimmt mit abnehmender Netzfrequenz ab. Vorzugsweise nimmt letztlich die Nenndrehzahl mit zunehmender Netzfrequenz zu, oder sie nimmt mit abnehmender Netzfrequenz ab.

Mit sich ändernder Netzfrequenz ändert sich die Synchrondrehzahl entsprechend. Durch die Änderung der Synchrondrehzahl ändert sich der Schlupf des Asynchrongenerators. Da die Rotorspannung sich im Wesentlichen proportional zum Schlupf verhält, wird einer zu hohen Rotorspannung bei der Minimal- und Maximaldrehzahl und einer Leistungsverschiebung bei der Nenndrehzahl dadurch entgegengewirkt, dass sich die Drehzahlparameter in dieselbe Richtung verändern wie die Netzfrequenz, um den Schlupf möglichst wenig zu verändern.

Bei der Netzparametermesseinrichtung handelt es sich insbesondere um eine Netzfrequenzmesseinrichtung.

Die Netzfrequenz kann in herkömmlicher Weise bestimmt werden. Die möglichen Zusammenhänge zwischen den Windenergieanlagenparametern und der Netzfrequenz sind bereits hinsichtlich des Verfahrens beschrieben und gelten auch für die Windenergieanlage.

Die Erfindung wird anhand eines Ausführungsbeispiels in sieben Figuren beschrieben. Dabei zeigen:

Fig. 1     eine schematische Ansicht einer erfindungsgemäßen Windenergieanlage mit doppelt gespeistem Asynchrongenerator,

Fig. 2     eine typische Drehmomentdrehzahlgrenzkennlinie,

Fig. 3     eine Rotorspannung in Abhängigkeit von der Drehzahl bei verschiedenen Netzfrequenzen eines Netzfrequenzbandes,

Fig. 4     eine Wirkleistungsaufteilung zwischen Stator und Rotor des doppelt gespeisten Asynchrongenerators,

Fig. 5     eine prinzipielle Darstellung der erfindungsgemäßen Regelung,

Fig. 6     eine schematische Darstellung für netzfrequenzabhängige Drehzahlveränderungen,

Fig. 7     eine schematische Darstellung der Drehzahlveränderung bei einem mehrdimensionalem Kennfeld.

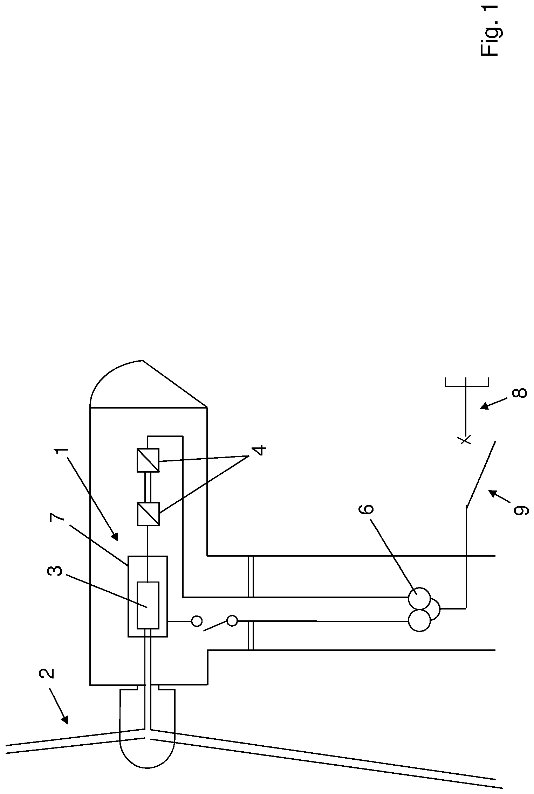

Der generelle Aufbau einer Windenergieanlage mit einem doppelt gespeisten Asynchrongenerator 1 ist in Fig. 1 dargestellt. Ein Windrotor 2 wird durch Wind in Drehbewegung gesetzt. Der Windrotor 2 ist über einen Antriebsstrang mit einem nicht dargestellten Getriebe mit einem Rotor 3 des doppelt gespeisten Asynchrongenerators 1 verbunden.

Der doppelt gespeiste Asynchrongenerator 1 ist netzseitig mit einem Umrichter 4 elektrisch leitend verbunden. Der Umrichter 4 wiederum ist über einen Transformator 6 mit dem elektrischen Netz verbunden. Auf der anderen Seite ist ein Stator 7 des doppelt gespeisten Asynchrongenerators 1 ebenfalls über eine elektrisch leitende Verbindung mit dem Transformator 6 verbunden. Der Transformator 6 ist über einen Leistungsschalter 9 an das elektrische Netz 8 angeschlossen.

Der Transformator 6 ist mit drei Wicklungen ausgeführt. Es sind jeweils separate Wicklungen für den Leistungsstrang des Stators 7 und des Umrichters 4 vorgesehen. Es sind jedoch auch Transformatorausführungen mit zwei oder auch einer höheren Anzahl an Wicklungen denkbar.

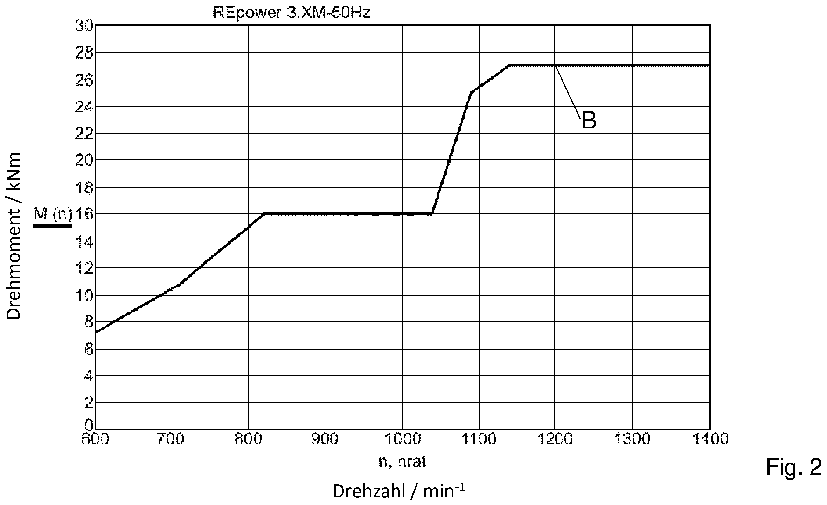

Fig. 2 zeigt eine herkömmliche Drehmoment-Drehzahlkennlinie für eine REpower (Senvion) Anlage 3.XM für eine Netzfrequenz f von 50 Hz. Genau genommen handelt es sich um eine Grenzkennlinie, deren Werte nicht überschritten werden dürfen. Eine typische reale Kennlinie würde unterhalb der Grenzkennlinie verlaufen. Das Drehmoment und die Drehzahl werden an einer Rotorwelle des Rotors 3 bestimmt Eine Minimaldrehzahl von 600 Umdrehungen pro Minute und eine Maximaldrehzahl von 1.400 Umdrehungen pro Minute sind eingezeichnet. Sie stimmen zufällig mit dem rechten und linken Ende der Graphik überein. Bei kleineren bzw. größeren Drehzahlen ist die Windenergieanlage nicht in Betrieb, d. h. die Rotorblätter sind so gestellt, dass kein Wind an ihnen angreift und sich der Windrotor 2 nicht dreht. Eine Nenndrehzahl liegt in diesem Beispiel bei 1.200 Umdrehungen pro Minute. Das Nenndrehmoment liegt bei etwa 27 kNm.

Im Teillastbereich, der bei kleineren Drehzahlen als der Nenndrehzahl vorliegt, sind die Rotorblätter üblicherweise so gestellt, dass sie die volle Windenergie ernten. Im Teillastbereich einschließlich bis zum Betriebspunkt B kann die Windenergieanlage zeitlich unbegrenzt Leistung erzeugen. Im Volllastbereich oberhalb der Nenndrehzahl ist das nur noch eingeschränkt möglich, um eine Überlastung zu verhindern.

Wenn die Windenergieanlage ihre Nenndrehzahl erreicht hat, hat das Drehmoment seinen höchsten Wert erreicht und sollte, um die Windenergieanlage nicht zu schädigen, nicht überschritten werden. Bei stärker blasendem Wind wird der Pitchwinkel weiter vergrößert. Bei Erreichen der Maximaldrehzahl kann durch weitere Erhöhung der Pitchwinkels ein Strömungsabriss auftreten, und die Windenergieanlage liefert keine Leistung mehr.

Eine Vorbemerkung zu den nachfolgenden Figuren. Bei dem doppeltgespeisten Asynchrongenerator 1 ist ein Schlupf s eine entscheidende elektrische Größe. Die Charakteristik des doppelt gespeisten Asynchrongenerators 1 liegt unter anderem darin, dass sich durch eine am Stator 7 anliegende Netzfrequenz f ein Drehfeld zwischen Stator 7 und Rotor 3 ausbildet, das eine Synchrondrehzahl aufweist, wobei für die Synchrondrehzahl

$$n\_syn = \frac{f}{ppz}$$

gilt, wobei $f$ die Netzfrequenz und $ppz$ die Polpaaranzahl des Stators 7 ist.

Bei einer Netznennfrequenz f_nenn = 50 Hz ergibt sich für einen zweipoligen Generator eine Synchrondrehzahl von 3.000 min[-1] und bei einem sechspoligen Generator eine Synchrondrehzahl von n_sync = 1.000 min[-1]. Der über den mechanischen Antriebsstrang mit dem Windrotor 2 verbundene Rotor 3 dreht sich mit einer sich in der Regel von der Synchrondrehzahl unterscheidenden, anderen Drehzahl n. Der daraus resultierende Schlupf s ist ein Maß für die Abweichung der tatsächlichen Drehzahl n des Rotors 3 von der Synchrondrehzahl n_sync gemäß:

$$s = \frac{n\_sync - n}{n\_sync}.$$

Der Schlupf s ist damit insbesondere von der Netzfrequenz f abhängig. Speziell ist der Schlupf s = 0, wenn der Rotor 3 mit Synchrondrehzahl n_sync rotiert, und er ist s = 1, wenn sich der Rotor 3 im Stillstand befindet.

Für die erfindungsgemäße Betrachtung ist es wichtig, dass sich die Wirkleistungsaufteilung zwischen dem Stator 7 und dem Rotor 3 des Generators und auch eine Rotorspannung UR mit der Synchrondrehzahl n_sync oder dem Schlupf s verändert. Es gilt für die Wirkleistungen:

P_stator = P_gesamt * n_sync/n = P_gesamt *(1/(1-s))

und

P_rotor = P_gesamt * (1 – n_sync/n) = P_gesamt *(-s/(1-s))

$$\text{mit } P\_gesamt = P\_rotor + P\_stator.$$

Für die Rotorspannung UR gilt:

$$UR = UR0*s$$

Dabei ist UR0 die sogenannte Rotorstillstandsspannung, also die Spannung, die sich beim Stillstand des Rotors einstellt.

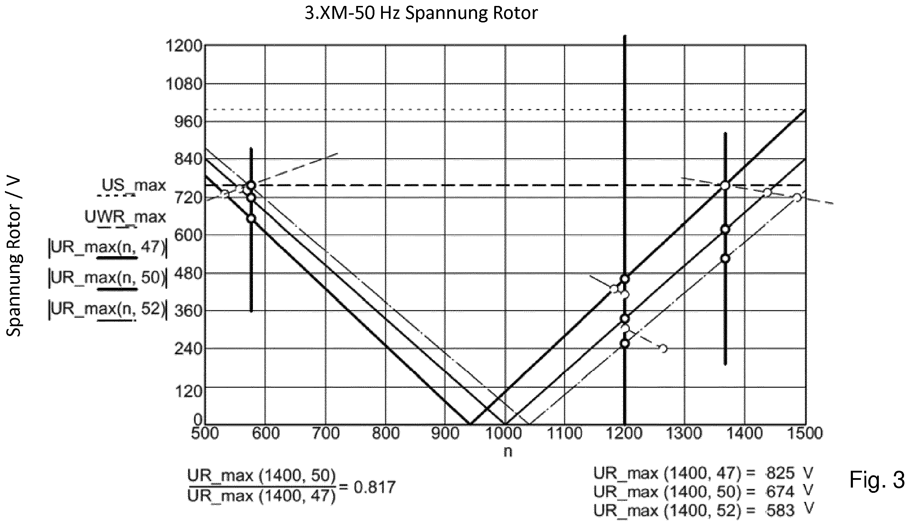

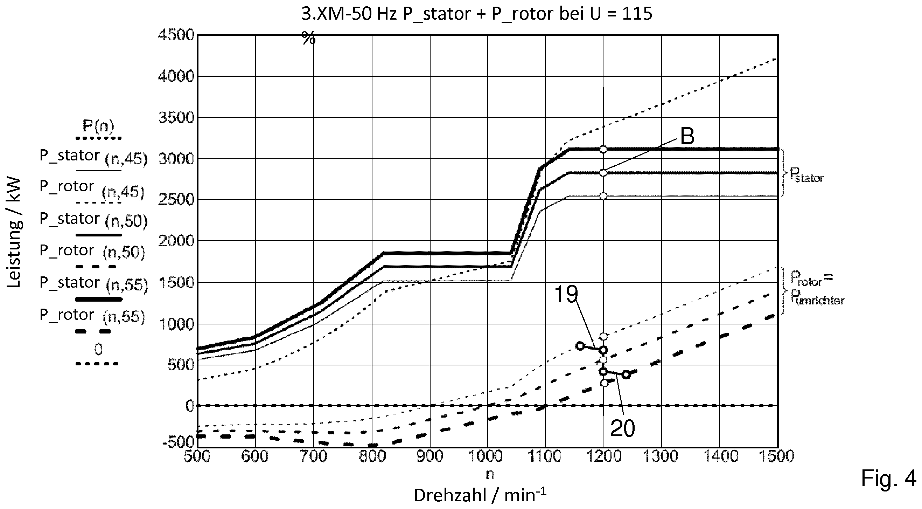

In Fig. 3 ist eine Parameterschar maximaler Rotorspannungen UR_max durch verschiedene der Netzfrequenzen f parametrisiert. Da die Spannung als Wechselspannung am Rotor 3 anliegt, werden hier die Amplituden der Wechselspannung als U_max aufgetragen. In Fig. 4 ist die Parameterschar von Rotor- und Statorleistungen P_rotor, P_stator ebenfalls durch verschiedene der Netzfrequenzen f parametrisiert. Unter Leistung wird hier die Wirkleistung verstanden.

Beide Parameterscharen sind jeweils gegen die Drehzahl n aufgetragen.

Fig. 3 stellt die Abhängigkeit der Rotorspannung UR gegen die Drehzahl n bei den Netzfrequenzen f = 47 Hz, f = 50 Hz und f = 52 Hz dar. Darüber hinaus ist die maximal zulässige Umrichterspannung US_max von etwa 760 V eingezeichnet. Die Rotorspannung UR liegt gemäß Fig.1 am Umrichter 4 an.

Fig. 3 zeigt die Parameterschar einer Windenergieanlage Senvion 3.XM für eine Netznennfrequenz f_nenn von f = 50 Hz. Die 3.XM hat einen sechspoligen Generator, so dass dessen Synchrondrehzahl bei n_sync = 1.000 Umdrehungen pro Minute liegt.

Die mittlere durchgezogene Linie zeigt den Spannungsverlauf bei einer Netznennfrequenz f_nenn von 50 Hz über dem Drehzahlbereich. Bei Abweichungen der Netzfrequenz f, die über längere Zeit andauern, stellen sich andere stationäre Verhältnisse ein, die bei einer Netzfrequenz f von 47 Hz in der dicken schwarzen Linie und bei einer Netzfrequenz f von 52 Hz durch eine dünne schwarze, unterbrochene Linie dargestellt sind. Die unterbrochene Linie stellt den Spannungsverlauf UR_max (n, 52) bei einer Netzfrequenz f von f = 52 Hz dar und die dicke Line den Spannungsverlauf UR_max (n, 47) bei einer Netzfrequenz f von f = 47 Hz.

Es sind drei senkrechte Linien für die gemäß dem Stand der Technik feststehende Minimaldrehzahl n_min, die Nenndrehzahl n_nenn und die Maximaldrehzahl n_max eingezeichnet. Die Minimaldrehzahl n_min der Windenergieanlage liegt bei etwa 570 min$^{-1}$, die Nenndrehzahl n_nenn liegt bei 1.200 min$^{-1}$ und die Maximaldrehzahl n_max bei etwa 1.370 min$^{-1}$.

Bei feststehender Minimaldrehzahl n_min und feststehender Maximaldrehzahl n_max müssen die Minimaldrehzahl n_min und die Maximaldrehzahl n_max derart gewählt werden, dass ein Spannungstoleranzbereich zur maximal zulässigen Umrichterspannung UWR_max vorhanden ist, der möglichen Frequenzschwankungen Rechnung trägt. Der Berechnung wird ein Netzfrequenzband zugrundegelegt zwischen einer minimalen Netzfrequenz f_min und einer maximalen Netzfrequenz f_max, die hier f_min = 47 Hz bzw. f_max = 52 Hz betragen sollen. Es sind durchaus auch andere Netzfrequenzbandbreiten denkbar. Die Netzfrequenzbandbreiten hängen auch von den regionalen oder nationalen Gegebenheiten ab, also inwieweit Netzstandards tatsächlich eingehalten werden.

Bei Netzfrequenzen f oberhalb der Netznennfrequenz f_nenn von 50 Hz wird bei geringen Drehzahlen n, insbesondere im Bereich der Minimaldrehzahl n_min, eine höhere Rotorspannung UR_max induziert, die den Umrichter 4 belastet. Im Bereich der Maximaldrehzahl n_max ist es hingegen umgekehrt, und zwar wird die maximale Rotorspannung UR_max größer, wenn die Netzfrequenz f unterhalb der Netznennfrequenz f_nenn liegt. Die Erfindung macht hier von der Idee Gebrauch, die Minimaldrehzahl n_min und die Maximaldrehzahl n_max variabel zu gestalten, d. h. die Minimaldrehzahl n_min(f) und die Maximaldrehzahl n_max(f) jeweils als Funktion der tatsächlich auftretenden Netzfrequenz f zu begreifen. Eine Abhängigkeit neben vielen anderen möglichen variablen Abhängigkeiten ist durch die schrägen Geraden in Fig. 3 dargestellt.

Durch die variable Abhängigkeit der An- und Abschaltwerte von der Drehzahl n entsteht die Möglichkeit, den zur Verfügung stehenden Drehzahlbereich auch bei der Netznennfrequenz f_nenn in beide Richtungen zu verlängern und bei niedrigeren Netzfrequenzen f die Maximaldrehzahl n_max zu verkleinern und bei höheren Netzfrequenzen f die Minimaldrehzahl n_min zu vergrößern.

Aufgrund der Charakteristik des doppelt gespeisten Asynchrongenerators 1 verschiebt sich das Verhältnis von Stator- und Rotorwirkleistung P_stator, P_rotor gemäß Fig. 4. Die Rotorwirkleistung P_rotor nimmt mit zunehmender Drehzahl n für alle Netzfrequenzen f des Netzfrequenzbandes zu.

Die drei durchgezogenen Linien betreffen die Statorleistung P_stator bei verschiedenen Netzfrequenzen f=45Hz, f_nenn = 50 Hz und f=55 Hz. Die gestrichelten Linien bezeichnen die Rotorleistung P_rotor bei denselben Netzfrequenzen f=45 Hz, f_nenn = 50 Hz und f=55 Hz. Die Statorleistungen P_stator bleiben für Drehzahlen n größer als die Nenndrehzahl n_nenn zunächst jeweils konstant, während die Rotorleistungen P_rotor für Drehzahlen n größer als die Nenndrehzahl n_nenn stetig etwa linear zunehmen.

Änderungen der Netzfrequenz f führen gemäß Fig. 4 zu Änderungen der Leistungsaufteilung zwischen Rotor 3 und Stator 7. Bei Unterfrequenz, also Netzfrequenzen f unterhalb der Netznennfrequenz f_nenn ergibt sich ein größerer Wirkleistungsanteil P_rotor (n, 45) am Rotor 3, so dass der Umrichter 4 und die mit dem Umrichter 4 verbundene Wicklung des Transformators 6 stärker belastet werden. Bei Überfrequenz, also Netzfrequenzen f oberhalb

der Netznennfrequenz f_nenn ergibt sich ein größerer Wirkleistungsanteil P_stator (n, 55) am Stator 7 und an der mit dem Stator 7 verbundenen Wicklung des Transformators 6. Es ergibt sich also insbesondere bei Unterfrequenz eine Höherbelastung des Umrichters 4 sowie der zugehörigen Wicklung des Transformators 6.

Insbesondere hat die Verringerung der Netzfrequenz f bei einer festgehaltenen Drehzahl n zur Folge, dass gemäß Fig. 4 eine deutlich höhere Leistung auf den Umrichter 4 wirkt. Das gilt auch bei der Nenndrehzahl n_nenn im Betriebspunkt B. Betriebspunkte B mit hoher Leistung sind daher unterfrequenzkritisch.

Erfindungsgemäß wird die Nenndrehzahl n_nenn bei kleineren Netzfrequenzen f herabgesetzt, und sie kann bei höheren Netzfrequenzen f heraufgesetzt werden. Diese beiden Verschiebungen sind in der Fig. 4 anhand von zwei Linien 19, 20 eingezeichnet. Die Linie 19 symbolisiert eine Verschiebung der Nenndrehzahl n_nenn von einer Nenndrehzahl n_nenn = 1200 bei einer Netzfrequenz von f = 50 Hz zu einer Nenndrehzahl n_nenn = 1160 bei einer Netzfrequenz von f = 45 Hz. Die Zahlen sind nur beispielhaft gewählt.

Die Line 20 symbolisiert eine Verschiebung der Nenndrehzahl n_nenn von einer Nenndrehzahl n_nenn = 1200 bei einer Netzfrequenz von f = 50 Hz zu einer Nenndrehzahl n_nenn = 1240 bei einer Netzfrequenz von f = 55 Hz. Die Zahlen sind ebenfalls nur beispielhaft gewählt. Deutlich wird aber der prinzipielle Zusammenhang, mit kleinerer Netzfrequenz kleinere Nenndrehzahlen und mit höherer Netzfrequenz höhere Nenndrehzahlen zu wählen, um die Leistungsverschiebung zwischen Stator auf der einen und Rotor respektive Umrichter auf der anderen Seite zu reduzieren.

Die damit korrespondierenden Veränderungen der Umrichterspannung UWR bzw. Rotorspannung UR sind auch in der Fig. 3 eingezeichnet.

Erfindungsgemäß wird die Nenndrehzahl n_nenn bei Unterfrequenz heruntergeregelt. Bei Überfrequenz kann sie heraufgeregelt werden, um eine höhere Leistungsausbeute am Rotor 3 zu erzielen.

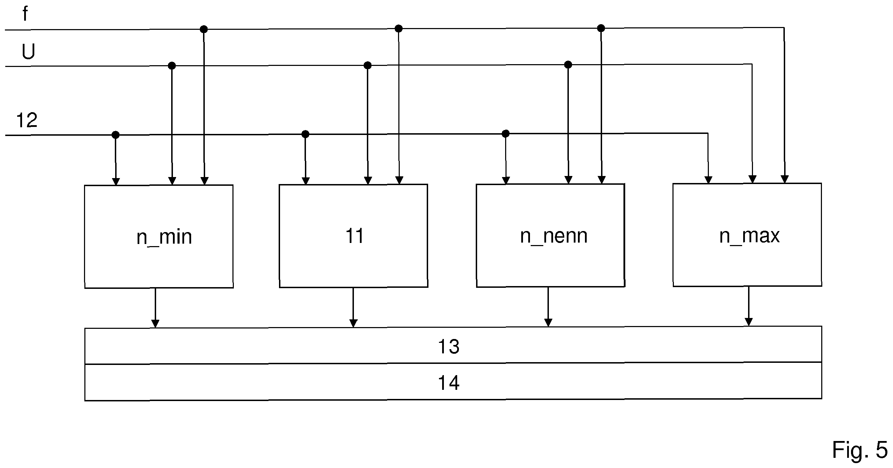

Fig. 5 zeigt eine Erweiterung der beschriebenen Erfindung. Erfindungsgemäß hat die gemessene Netzfrequenz f einen variablen Einfluss auf die Minimaldrehzahl n_min und die Nenndrehzahl n_nenn und die Maximaldrehzahl n_max; gegebenenfalls könnten auch noch andere Windenergieanlagenparameter 11 beeinflusst werden. Darüber hinaus wäre es denkbar, dass Minimaldrehzahl n_min, Nenndrehzahl n_nenn und Maximaldrehzahl n_max auch durch eine sich verändernde Netzspannung U beeinflusst werden oder durch sonstige Parameter 12 des elektrischen Netzes. Der Regeleinrichtung 13 der Windenergieanlage ist eine Schutzeinrichtung 14 nachgeschaltet, die bei Überschreiten von Abschaltwerten, deren Größe sich an der Minimaldrehzahl n_min, Nenndrehzahl n_nenn und Maximaldrehzahl n_max orientiert, die Windenergieanlage abschaltet. Die Abschaltwerte der Schutzeinrichtung 14 werden entsprechend den Werten der Minimaldrehzahl n_min, Nenndrehzahl n_nenn, Maximaldrehzahl n_max erfindungsgemäß ebenfalls erhöht bzw. verringert.

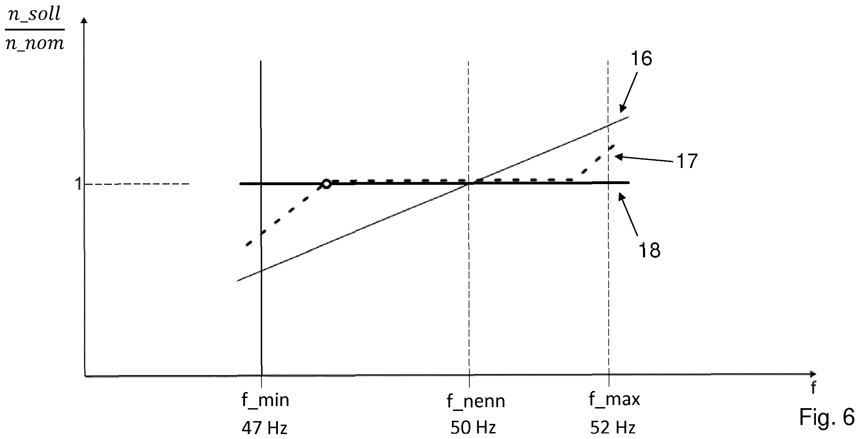

In Fig. 6 sind zwei mögliche Abhängigkeiten der Drehzahl n von der Netzfrequenz f dargestellt. n_nom bezeichnet hier auch zusammenfassend die konstante Maximal- n_max, Minimal- n_min oder Nenndrehzahl n_nenn. Die erfindungsgemäße, von der Netzfrequenz f abhängige Maximal- n_max, Minimal- n_min oder Nenndrehzahl n_nenn, die hier zusammenfassend als n_soll bezeichnet wird, kann sehr unterschiedlich abhängig sein. Grundsätzlich ist es denkbar, dass sich die Maximal- n_max, Minimal- n_min oder Nenndrehzahl n_nenn linear gemäß Kennlinie 16 mit der Netzfrequenz f ändert, und zwar sowohl in positiver als auch in negativer Richtung, oder dass sich der Netzfrequenzeinfluss nur an den Rändern des Netzfrequenzbandes gemäß Kennlinie 17 erkennbar macht gemäß Fig. 6. Die waagerechte Kennlinie 18 beschreibt keinen Frequenzeinfluss auf die Drehzahlparameter.

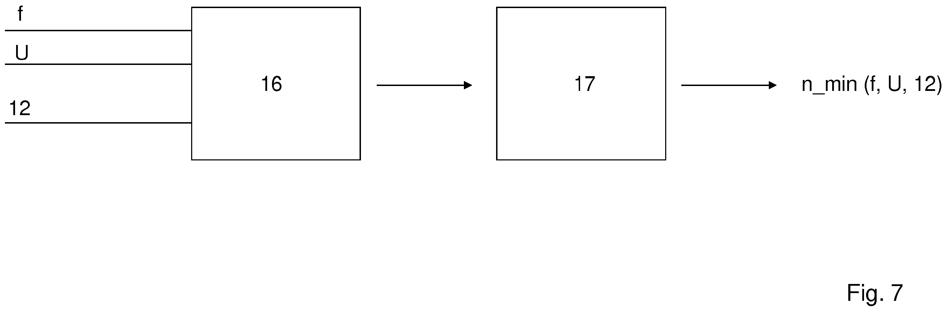

In Fig. 7 ist ein verallgemeinertes Flussdiagramm zur Steuerung der Drehzahlparameter n_min, n_max, n_nenn in Abhängigkeit verschiedener Netzparameter dargestellt. In Fig.7 ist exemplarisch nur die Minimaldrehzahl n_min eingezeichnet. Zum einen sind die Netzparameter Netzfrequenz f, Netzspannung U und sonstige Parameter 12 als mögliche, die Drehzahlparameter n_min, n_max und n_nenn beeinflussende Netzparameter dargestellt. Der Zusammenhang zwischen der Beeinflussung der Drehzahlparameter n_min, n_max und n_nenn kann jedoch anders als in den Fig. 3 und Fig. 4 dargestellt, nicht nur eine eindimensionale Kennlinie, d. h. eine Funktion der Netzfrequenz f sein, sondern die Drehzahlparameter können sich als mehrdimensionale Funktion, d. h. mehrdimensionales Kennfeld 16 der verschiedener Netzparameter darstellen.

Darüber hinaus kann der Steuerung eine Trägheits- oder Verzögerungseinheit 17 nachgeschaltet sein. Bei bestimmten Netzparameteränderungen kann es sinnvoll ein, Änderungen der Drehzahlparameter n_min, n_max, n_nenn der Windkraftanlage erst verzögert durchzuführen, also wenn sich eine bestimmte veränderte Netzfrequenz f eingestellt hat. Dies ist insbesondere dann der Fall, wenn die Änderung der Netzfrequenz f in bestimmten Drehzahlbereichen lediglich zu einer langsamen Erwärmung von Bauelementen führt. Auf der anderen Seite kann es möglich sein, dass die Änderung der Netzfrequenz f eine sofortige Reaktion erforderlich macht und die Drehzahlparameter n_min, n_max, n_nenn der Windkraftanlage sofort geändert werden müssen. Dies ist insbesondere dann der Fall, wenn sich die Umrichterspannung U_umrichter schlagartig erhöhen würde. Eine Verzögerung oder eine sofortige Änderung der Drehzahlparameter n_min, n_max, n_nenn kann also davon abhängen, welche Netzparameter sich ändern und in welchem Drehzahlbereich sich die Windenergieanlage gerade befindet.

Bezugszeichenliste

1 Asynchrongenerator
2 Windrotor
3 Rotor des Generators
4 Umrichter

6 Transformator
7 Stator des Generators
8 elektrisches Netz
9 Leistungsschalter

11 Windenergieanlagenparameter
12 sonstige Parameter
13 Regeleinrichtung
14 Schutzeinrichtung

16 Kennlinie
17 Kennlinie
18 Kennlinie
19 Linie
20 Linie

f Netzfrequenz
n Drehzahl
U Netzspannung

**Patentansprüche**

1. Verfahren zur Steuerung einer Windenergieanlage mit einem Windrotor (2), einem damit angetriebenen, doppelt gespeisten Asynchrongenerator (1) und einem Umrichter (4),

   der zur Einspeisung elektrischer Energie in ein elektrisches Netz (8) mit wenigstens einem Netzparameter elektrisch angeschlossen wird, und
   einer Steuerung mit einem Speicher, in dem Drehzahlparameter abgelegt werden, **dadurch gekennzeichnet, dass**
   wenigstens eine veränderliche Kennlinie zwischen wenigstens einem der Drehzahlparameter und dem wenigstens einen Netzparameter bestimmt wird, indem der wenigstens eine Netzparameter als Netzfrequenz (f) gewählt wird und der wenigstens eine Drehzahlparameter als eine Minimal- und eine Maximaldrehzahl gewählt wird und sich die Minimal- und die Maximaldrehzahl in dieselbe Richtung verändern wie die Netzfrequenz (f), die Minimaldrehzahl n min und die Maximaldrehzahl n max mit zunehmender Netzfrequenz erhöht werden,
   die wenigstens eine Kennlinie in dem Speicher abgelegt wird,
   der wenigstens eine Netzparameter gemessen wird, die Netzparametermesswerte der Steuerung zugeführt werden,
   die über die wenigstens eine Kennlinie den Netzparametermesswerten zugeordneten Werte des wenigstens einen Drehzahlparameters aktiviert werden.

2. Verfahren nach Anspruch 1,
   **dadurch gekennzeichnet, dass** ein Netzfrequenzband mit einer minimalen f_min und einer maximalen Netzfrequenz f_max um eine Netznennfrequenz f_nenn vorgegeben wird und die Netzfrequenz (f) in dem Netzfrequenzband gemessen wird.

**3.** Verfahren nach Anspruch 1 oder 2,
**dadurch gekennzeichnet, dass** die Nenndrehzahl n_nenn in der wenigstens einen Kennlinie mit zunehmender Netzfrequenz (f) erhöht wird.

**4.** Verfahren nach Anspruch 1 bis 3,
**dadurch gekennzeichnet, dass** die Minimaldrehzahl n_min der Netznennfrequenz f_nenn kleiner als die Minimaldrehzahl n_min der maximalen Netzfrequenz f_max in der wenigstens einen Kennlinie gewählt wird.

**5.** Verfahren nach Anspruch 1 bis 4,
**dadurch gekennzeichnet, dass** die Maximaldrehzahl n_max der Netznennfrequenz f_nenn größer als die Maximaldrehzahl n_max der minimalen Netzfrequenz f_min in der wenigstens einen Kennlinie gewählt wird.

**6.** Verfahren nach Anspruch 1 bis 5,
**dadurch gekennzeichnet, dass** eine Nenndrehzahl n_nenn bei minimaler Netzfrequenz f_min kleiner als bei der Netznennfrequenz f_nenn in der wenigstens einen Kennlinie gewählt wird.

**7.** Verfahren nach Anspruch 1 bis 6,
**dadurch gekennzeichnet, dass** eine Nenndrehzahl n_nenn bei maximaler Netzfrequenz f_max größer als bei der Netznennfrequenz f_nenn in der wenigstens einen Kennlinie gewählt wird.

**8.** Verfahren nach Anspruch 1 bis 7,
**dadurch gekennzeichnet, dass** der einem geänderten Netzparameterwert zugeordnete, geänderte Drehzahlparameter erst nach einer Verzögerung aktiviert wird.

**9.** Verfahren nach Anspruch 1 bis 8,
**dadurch gekennzeichnet, dass** Abschaltwerte einer Schutzeinrichtung (14) entsprechend den Drehzahlparameterwerten geändert werden.

**10.** Windenergieanlage mit einem Windrotor (2), einem damit angetriebenen, doppelt gespeisten Asynchrongenerator (1) und einem Umrichter (4),

der zur Einspeisung elektrischer Energie in ein elektrisches Netz (8) mit wenigstens einem Netzparameter elektrisch angeschlossen ist, und
einer Steuerung mit einem Speicher, in dem Drehzahlparameter abgelegt sind, **dadurch gekennzeichnet, dass** wenigstens eine veränderliche Kennlinie zwischen wenigstens einem der Drehzahlparameter und dem wenigstens einen Netzparameter in dem Speicher abgelegt ist, wobei der wenigstens eine Netzparameter als Netzfrequenz (f) ausgebildet ist und der wenigstens eine Drehzahlparameter als eine Minimal- und eine Maximaldrehzahl ausgebildet ist und sich die Minimal- und die Maximaldrehzahl in dieselbe Richtung verändern wie die Netzfrequenz (f) und sich die Minimaldrehzahl n_min und die Maximaldrehzahl n_max mit zunehmender Netzfrequenz (f) erhöhen, und
eine Netzparametermesseinrichtung mit der Steuerung elektrisch leitend in Verbindung steht und ihre Messwerte der Steuerung zuführt und
die Steuerung die den Netzparametermesswerten über die wenigstens eine Kennlinie zugeordneten Drehzahlparameter aktiviert.

**11.** Windenergieanlage nach Anspruch 10,
**dadurch gekennzeichnet, dass** der Drehzahlparameter aus der Gruppe Minimaldrehzahl n_min, Maximaldrehzahl n_max, Nenndrehzahl n_nenn stammt.

**12.** Windenergieanlage nach Anspruch 10 oder 11,
**dadurch gekennzeichnet, dass** die Netzparametermesseinrichtung eine Netzfrequenzmesseirichtung umfasst.

**13.** Windenergieanlage nach Anspruch 10, 11 oder 12,
**dadurch gekennzeichnet, dass** in der wenigstens einen Kennlinie die Minimaldrehzahl n_min und/oder die Maximaldrehzahl n_max und/oder die Nenndrehzahl n_nenn mit zunehmender Netzfrequenz (f) zunehmen.

EP 3 512 064 B1

**Claims**

1. Method for controlling a wind turbine having a wind rotor (2), a doubly-fed asynchronous generator (1) driven thereby, and a converter (4),

which is electrically connected to feed electrical energy into an electrical grid (8) with at least one grid parameter, and

having a controller with a memory, in which rotation speed parameters are stored, **characterized in that** at least one variable characteristic is determined between at least one of the rotation speed parameters and the at least one grid parameter, by the at least one grid parameter being selected as grid frequency (f) and the at least one rotation speed parameter being selected as a minimum and a maximum rotation speed and the minimum and the maximum rotation speed are varying in the same direction as the grid frequency (f), and the the minimum rotation speed n_min and the maximum rotation speed n_max being increased with increasing grid frequency (f),

the at least one characteristic being stored in the memory,

the at least one grid parameter being measured, the grid parameters measurements being fed to the controller, the values of the at least one rotation rate parameter that are associated with the grid parameter measurements via the at least one characteristic being activated.

2. Method according to Claim 1,
**characterized in that** a grid frequency band with a minimum grid frequency f_min and a maximum grid frequency f_max is defined about a nominal grid frequency f_nenn and the grid frequency (f) is measured in the grid frequency band.

3. Method according to Claim 1 or 2,
**characterized in that** the nominal rotation speed n_nenn in the at least one characteristic are increased with increasing grid frequency (f).

4. Method according to Claim 1 to 3,
**characterized in that** the minimum rotation speed n_min of the nominal grid frequency f_nenn is selected to be lower than the minimum rotation speed n_min of the maximum grid frequency f_max in the at least one characteristic.

5. Method according to Claim 1 to 4,
**characterized in that** the maximum rotation speed n_max of the nominal grid frequency f_nenn is selected to be greater than the maximum rotation speed n_max of the minimum grid frequency f_min in the at least one characteristic.

6. Method according to Claim 1 to 5,
**characterized in that** a nominal rotation speed n_nenn at a minimum grid frequency f_min is selected to be lower than the nominal grid frequency f_nenn in the at least one characteristic.

7. Method according to Claim 1 to 6,
**characterized in that** a nominal rotation speed n_nenn at a maximum grid frequency f_max is selected to be greater than the nominal grid frequency f_nenn in the at least one characteristic.

8. Method according to Claim 1 to 7,
**characterized in that** the modified rotation speed parameter assigned to a modified grid parameter value is activated only after a delay.

9. Method according to Claim 1 to 8,
**characterized in that** cut-off values of a protective device (14) are changed according to the rotation speed parameter values.

10. Wind turbine having a wind rotor (2), a doubly-fed induction generator (1) driven thereby, and a converter (4),

which is electrically connected to feed electrical energy into an electrical grid (8) with at least one grid parameter, and

having a controller with a memory, in which rotation rate parameters are stored, **characterized in that** at least one variable characteristic between at least one of the rotation speed parameters and the at least one

10

grid parameter is stored in the memory wherein the at least one grid parameter is configured as grid frequency (f) and the at least one rotation speed parameter is configures as a minimum rotation speed and a maximum rotation speed and the minimum rotation speed and the maximum rotation speed are varying in the same direction as the grid frequency (f) and the minimum rotation speed n_min and the maximum rotation speed n_max are increasing with increasing grid frequency (f)

and

a grid parameter measuring device is electrically conductively connected to the controller and feeds its measurements to the controller, and

the controller activates the rotation speed parameters that are associated with the grid parameter measurements via the at least one characteristic.

11. Wind turbine according to Claim 10,
**characterized in that** the rotation speed parameter originates from the group of minimum rotation speed n_min, maximum rotation speed n_max, nominal rotation speed n_nenn.

12. Wind turbine according to Claim 10 or 11,
**characterized in that** the grid parameter measuring device comprises a grid frequency measuring device.

13. Wind turbine according to Claim 10, 11 or 12,
**characterized in that** in the at least one characteristic curve the minimum rotation speed n_min and/or the maximum speed n_max and/or the nominal speed n_nenn increase with increasing grid frequency (f).

## Revendications

1. Procédé pour la commande d'une éolienne avec un rotor tournant sous l'effet du vent (2), un générateur asynchrone (1) alimenté en double, entraîné par celui-ci, et un convertisseur (4) qui est raccordé électriquement avec au moins un paramètre de réseau pour l'injection d'énergie électrique dans un réseau électrique (8) et avec une commande avec une mémoire dans laquelle des paramètres de vitesse de rotation sont mémorisés,

   **caractérisé en ce**
   **qu'**au moins une caractéristique variable est déterminée entre au moins l'un des paramètres de vitesse de rotation et le au moins un paramètre de réseau,
   le au moins un paramètre de réseau étant sélectionné comme fréquence de réseau (f) et le au moins un paramètre de vitesse de rotation étant sélectionné comme une vitesse de rotation minimale et une vitesse de rotation maximale et la vitesse de rotation minimale et la vitesse de rotation maximale variant dans la même direction que la fréquence de réseau (f), la vitesse de rotation minimale n min et la vitesse de rotation maximale n max étant augmentée avec l'augmentation de la fréquence de réseau, la au moins une caractéristique étant mémorisée dans la mémoire, le au moins un paramètre de réseau étant mesuré, les valeurs mesurées du paramètre de réseau étant amenées à la commande, les valeurs du au moins un paramètre de vitesse de rotation attribuées par la au moins une caractéristique aux valeurs mesurées du paramètre de réseau étant activées.

2. Procédé selon la revendication 1, **caractérisé en ce qu'**une bande de fréquence réseau est prédéfinie avec une fréquence de réseau minimale f_min et une fréquence de réseau maximale f_max autour d'une fréquence de réseau nominale f_nenn et la fréquence de réseau (f) est mesurée dans la bande de fréquence de réseau.

3. Procédé selon la revendication 1 ou 2, **caractérisé en ce que** la vitesse de rotation nominale n_nenn est augmentée dans la au moins une caractéristique variable avec l'augmentation de la fréquence de réseau (f).

4. Procédé selon les revendications 1 à 3, **caractérisé en ce que** la vitesse de rotation minimale n_min de la fréquence de réseau nominale f_nenn est sélectionnée inférieure à la vitesse de rotation minimale n_min de la fréquence de réseau maximale f_max dans la au moins une caractéristique.

5. Procédé selon les revendications 1 à 4, **caractérisé en ce que** la vitesse de rotation maximale n_max de la fréquence de réseau nominale f_nenn est sélectionnée supérieure à la vitesse de rotation maximale n_max de la fréquence de réseau minimale f_min dans la au moins une caractéristique.

**6.** Procédé selon les revendications 1 à 5, **caractérisé en ce qu'**une vitesse de rotation nominale n_nenn est sélectionnée, pour une fréquence de réseau minimale f_min, inférieure à la fréquence de réseau nominale f_nenn dans la au moins une caractéristique.

**7.** Procédé selon les revendications 1 à 6, **caractérisé en ce qu'**une vitesse de rotation nominale n_nenn est sélectionnée, pour une fréquence de réseau maximale f _max, supérieure à la fréquence de réseau nominale f_nenn dans la au moins une caractéristique.

**8.** Procédé selon les revendications 1 à 7, **caractérisé en ce que** le paramètre de vitesse de rotation modifié, attribué à une valeur de paramètre de réseau modifiée, n'est activé qu'après un retard.

**9.** Procédé selon les revendications 1 à 8, **caractérisé en ce que** des valeurs de coupure d'un dispositif de protection (14) sont variées selon les valeurs de paramètres de vitesse de rotation.

**10.** Éolienne avec un rotor tournant sous l'effet du vent (2), un générateur asynchrone (1) alimenté en double, entraîné par celui-ci, et un convertisseur (4) qui est raccordé électriquement avec au moins un paramètre de réseau pour l'injection d'énergie électrique dans un réseau électrique (8) et avec une commande avec une mémoire dans laquelle des paramètres de vitesse de rotation sont mémorisés,
**caractérisée en ce**
**qu'**au moins une caractéristique variable entre au moins l'un des paramètres de vitesse de rotation et le au moins un paramètre de réseau est mémorisée dans la mémoire, le au moins un paramètre de réseau étant configuré comme fréquence de réseau (f) et le au moins un paramètre de vitesse de rotation étant configuré comme une vitesse de rotation minimale et une vitesse de rotation maximale et la vitesse de rotation minimale et la vitesse de rotation maximale variant dans la même direction que la fréquence de réseau (f), et la vitesse de rotation minimale n_min et la vitesse de rotation maximale n_max augmentant avec l'augmentation de la fréquence de réseau (f) et un dispositif de mesure de paramètres de réseau étant en relation électroconductrice avec la commande et amenant ses valeurs mesurées à la commande et la commande activant les paramètres de vitesse de rotation attribués par la au moins une caractéristique aux valeurs mesurées des paramètres de réseau.

**11.** Éolienne selon la revendication 10, **caractérisée en ce que** le paramètre de vitesse de rotation vient du groupe vitesse de rotation minimale n_min, vitesse de rotation maximale n_max, vitesse de rotation nominale n_nenn.

**12.** Éolienne selon la revendication 10 ou 11, **caractérisée en ce que** le dispositif de mesure de paramètres de réseau comprend un dispositif de mesure de la fréquence de réseau.

**13.** Éolienne selon la revendication 10, 11 ou 12, **caractérisée en ce que** dans la au moins une caractéristique, la vitesse de rotation minimale n_min et/ou la vitesse de rotation maximale n_max et/ou la vitesse de rotation nominale n_nenn augmentent avec l'augmentation de la fréquence de réseau (f).

Fig. 1

Fig. 2

EP 3 512 064 B1

3.XM-50 Hz Spannung Rotor

$$\frac{UR\_max\ (1400,\ 50)}{UR\_max\ (1400,\ 47)} = 0.817$$

UR_max (1400, 47) = 825 V
UR_max (1400, 50) = 674 V
UR_max (1400, 52) = 583 V

Fig. 3

3.XM-50 Hz P_stator + P_rotor bei U = 115

Fig. 4

f

U

12

| n_min | 11 | n_nenn | n_max |

13

14

EP 3 512 064 B1

Fig. 5

Fig. 6

f

U

12

16

17

n_min (f, U, 12)

EP 3 512 064 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009037238 B3